# EUROPEAN PATENT APPLICATION

(11) **EP 2 243 377 A1**
(43) Date of publication of application: **27.10.2010**
(21) Application number: 10158937.2
(22) Date of filing: 01.04.2010
(51) Int. Cl.: A22C 11/00, A22C 13/00, A23L 1/317

(54) **Sausage**

(30) Priority: 21.04.2009 EP 09158379; 22.04.2009 EP 09158510
(71) Applicant: Unilever N.V., 3013 AL Rotterdam (NL); Unilever Plc, A Company Registered In England And Wales under company no. 41424 of Unilever House, 100 Victoria Embankment London EC4Y 0DY (GB)
(72) Inventor: Ewald, Ron, 91522 Ansbach (DE); Lubig, Wolfgang, H, 91522 Ansbach (DE); Ruhs, Marco, 91522 Ansbach (DE)
(74) Representative: Fijnvandraat, Arnoldus

(57) **Abstract**

A process to prepare an ambient stable sausage comprising a filling and a casing, the process comprising the steps of:
a) filling a dried casing with a filling, wherein the casing comprises from 30 to 70 %wt. of collagen, based on the weight of the casing, wherein the collagen of the casing has been coagulated before drying the casing, resulting in at least one sausage,
b) drying the sausage resulting from step a) to a water activity of between 0.960 and 0.990,
c) smoking the sausage resulting from step b),
d) denaturating the sausage resulting from step c),
e) drying the sausage resulting from step d) to a water activity of between 0.930 to 0.970,
f) packaging the sausage resulting from step e) in a packaging
g) sterilising the packaged sausage resulting from step f).

## Description

The present invention relates to a process to prepare an ambient stable sausage. It further relates to a sausage produced according to the process of the invention.

### Introduction

Ambient stable sausages comprise a casing which contains a meat filling. One specific type of ambient stable sausages are sausages known as e.g. Wiener-type sausages, Frankfurter-type sausages, Delicacy - sausages, Bockwurst or Knack-type sausages, which are characterised by a specific snap- or bite effect when consumed. This snap- or bite effect can be described as the snap impression during the first bite in the sausage. During the production process of this type of sausages, the casing of the sausage may conventionally be co-extruded, together with a meat-dough, to form together a sausage. The casing may comprise collagen. An alternative casing used in the art is a casing from intestines of animals. The meat dough is stuffed in the intestines to form a sausage.

For the specific types of sausages, mentioned above, the snap- or bite effect is highly relevant and an improvement of this effect is of high importance.

The problem of conventional production methods using co-extrusion of the meat dough of the filling and the casing is that the snap- or bite effect is relatively poor, at least not considered as optimal by the consumer. This holds in particularly true for sausages that are ambient stable and undergo a sterilisation step during production, as sterilisation steps in general negatively influence the snap- or bite effect. A production method using intestines as the casing is relatively expensive and less efficient during industrial application, because of the required cleaning and treatment of the intestines, and the fluctuating quality and availability of the material.

EP 0821878 relates to a specific collagen blend and a sausage casing comprising this collagen composition, which results in a maintained snap- or bite effect after sterilisation of the sausage. A sausage is produced by co-extruding a filling and a casing comprising a low amount of collagen. The resulting sausage is treated with liquid smoke. No smoking step, drying steps, or denaturation step are disclosed.

WO 03/017770 relates to an extruded tubular casing for food-products (such as sausages), which are made from an extrudabe gel. The gel comprises collagen, fat and an humectant. The collagen content consists generally of porcine collagen, and the fat content is reduced below that of natural porcine skin or hide. Generally, the ratio of collagen to fat is at least 2.0 o 1 and especially above 10 to 1.

US 4 615 889 relates to a collagen sausage casing having improved clarity and weeping properties and a method of making the casing. The casing contains from 50 to 80% by weight of bovine collagen and from 20 to 50% by weight of acidified brine extracted pork skin.

US 2009/061051 relates to collagen/polysaccharide casings. The casings maintain their structural integrity over time and do not adversely affect the quality and taste of the encased foodstuff.

FR 2226932 relates to a process to manufacture an edible artificial collagen casing, by extruding an extrudable acid-swollen collagen mass, to obtain the desired form, and drying of the edible collagen, wherein a smoke liquid has been incorporated in the mass of acid-swollen collagen before extrusion.

It was found that the snap- or bite effect of sausages prepared using the process of co-extrusion showed a snap- or bite effect which was not considered as optimal and could be improved. The aim of the present invention is to provide a process which is cost-efficient, relatively simple and stable during industrial application, and which provides an ambient stable sausage with a snap- or bite effect which is preferably higher than that of ambient stable sausages produced with a process using co-extrusion.

### Summary of the invention

This problem has surprisingly been solved by the following process to prepare an ambient stable sausage comprising a filling and a casing, the process comprising the steps of:
a) filling a dried casing with a filling, wherein the casing comprises from 30 to 70 %wt. of collagen, based on the weight of the casing, wherein the collagen of the casing has been coagulated before drying the casing, resulting in at least one sausage,
b) drying the sausage resulting from step a) to a water activity of between 0.960 and 0.990,
c) smoking the sausage resulting from step b),
d) denaturating the sausage resulting from step c),
e) drying the sausage resulting from step d) to a water activity of between 0.930 to 0.970,
f) packaging the sausage resulting from step e) in a packaging
g) sterilising the packaged sausage resulting from step f).

The present invention further relates to a sausage obtainable by the process of the present invention.

### Detailed description of the invention

All percentages are weight/weight percentages by weight of the total sausage unless otherwise indicated. Where the term "comprising" is used in the specification and the claims, it is intended not to exclude any terms, steps or features not specifically recited.

"Ambient stable" means that the product can be safely stored and sold in a sealed container at room temperature while still having a shelf life for a period of at least 2 months, preferably of at least 6 months. Preferably the product remains stable for up to some years.

In step a) of the process of the invention the casing is filled with a filling. The casing should comprise at least 30%wt and less than 70%wt of collagen, based on the weight of the casing. Preferably, the amount of collagen is from 40 to 60% wt, more preferably form 45 to 55%wt. Preferably, the collagen is selected from beef collagen, pork collagen and mixtures thereof. Optimal effect was obtained when the collagen is beef collagen. Besides the indicated amounts of the preferred types of collagen, collagen from other animals may be present, although this is not preferred. The total amount of collagen is between 30 and 70wt%, based on the weight of the casing.

When producing a collagen casing, the collagen is solidified, called coagulation. Coagulation can be reached in several ways in the art of making casings. In a way not used in the present invention, coagulation can e.g. be done directly after extrusion of a collagen comprising gel to a casing. The extruded casing is dried and simultaneously coagulated as a long tube with warm air with low relative humidity. Alternatively, the dried casing can be treated with a solution to coagulate the collagen.

In the process according to the present invention, a collagen casing is used, wherein the collagen is coagulated prior to drying. As such, this way of preparing casings is known in the art. This way of preparing a casing is preferably done by preparing a dough comprising collagen and an edible acid, preferaby HCl. The pH of the dough may be around 2.5. The collagen comprising dough is extruded as a casing and coagulation is performed by contacting the acid collagen comprising casing with a alkaline liquid, such as a solution comprising ammonium sulphate, or preferably contacting the casing with NH3 gas. The pH of the casing may rise up to about 10. Within minutes, usually the collagen is coagulated. The casing comprising coagulated collagen may be washed and preferably has a final pH of between 7 and 8.5, more preferably of between 7.5 and 8. The skilled person will recognise a casing comprising coagulated collagen as the protein in the collagen casing is irreversably transformed from a gel stage to a solid phase. After coagulation, the casing is preferably gathered and wrapped and is dried.

Preferably, the casing further comprises cellulose. The cellulose contributes to the improved snap- or bite effect. When present, preferably the cellulose is present in an amount of from 5 to 15 %wt., preferably from 8 to 12 %wt., based on the weight of the casing.

The casing is filled with a filling. The filling may comprise meat from any source suitable to use in sausage production such as e.g. from pork, beef, chicken, poultry, turkey, sheep, horse or mixtures thereof. Preferably, the fat content of the filling at step a) amounts from 15 to 50%wt, more preferably from 25 to 35%wt, most preferably from 27 to 30%wt., based on the weight of the filling. Preferably, the meat is minced meat. The water content of the filling at this stage, i.e. before drying, is preferably from 40 to 80%wt, more preferably from 50 to 58%wt.

Surprisingly it was found, that the snap- or bite effect of the sausage resulting from the process of the present invention could be further improved when the filling was treated with the enzyme transglutaminase, before step a). For this treatment, preferably 0 to 0.15 %wt, more preferably, 0.02 to 0.05%wt., based on the weight of the filling, of the enzyme was added to the filling. When an enzyme treatment is desired, it is preferred that an optional pre-heating step as described below is applied before the first drying step b). This heating step pre-activates the enzyme. For example, during the drying step b), and the smoking step c), the enzyme is normally active. During the denaturation step d), the enzyme may become denaturated.

The casing is filled with a machinery normally used in the art of sausage making, such as with a apparatus of Handtmann^{™}, in a conventional way. During the filling of the casing, the casing may be twisted, in this way resulting in a chain of for example 80-120 single sausages. The sausages may be separated before, or preferably during the packaging step e). The length of each individual sausage may be from e.g. 4 cm to 30 cm, preferably from 5 to 25cm more preferably from 18 to 20 cm. The width of the casing, and therewith of the final sausage preferably is between 13 and 28mm, preferably from 15 to 20 mm. The weight of the individual sausages preferably is from 10 to 100g, more preferably from 25 to 75g, most preferably from 40 to 60g.

Step a) results in a sausage comprising a casing and a filling. Preferably, step a) of the process of the present invention is followed by a pre-heating step. This pre-heating step is preferably conducted at a temperature of from 35°C to 58°C, more preferably of from 35°C to 50°C. The optional heating step is preferably conducted during 10 to 40 minutes, more preferably from 20 to 30 minutes. The relative humidity during this optional heating step preferably is between 80 and 100%, preferably between 90 and 95%. Preferably the sausage comprises nitrite, e.g. in an amount of from 40 to 150ppm, preferably between 80 and 130ppm, most preferably between 100 and 120ppm. When the sausage comprises nitrite, this heating step results in an advantageous reddening also called curing, of the meat in the sausage.

In step b) of the process of the present invention the sausage resulting from step a) or from the pre-heating step is dried. Drying can be done in a conventional drying chamber. For example, drying can be conducted by blowing dry air around the sausages. The air is preferably warm air. Drying preferably is conducted at a temperature of from 35°C to 58°C, preferably of from 40 to 50°C. By the process of drying, the weight of the sausage is reduced with preferably 7 to 13%wt, preferably 9 to 11 %wt of. This is mainly due to the evaporation of water. The drying step b) preferably takes 40 to 90 minutes, more preferably from 60 to 80 minutes. The relative air humidity during the drying step b is preferably from 10 to 50%, more preferably from 20 to 30%. After the first drying step, the water activity is between 0,960 and 0.99, preferably between 0.960 and 0.980, more preferably between 0,965 and 0,975.

The dried sausage resulting from step b) is subsequently smoked during step c). Smoking may be conducted in a conventional smoking room. The smoke as used in the smoking room preferably is derived from wood, preferably from at least one of the types of wood selected from beech wood, oak wood, alder wood, juniper wood, pine wood, erica wood, and mixtures thereof.

Preferably, smoking is conducted for 10 to 60 minutes, preferably from 15 to 30 minutes, most preferably from 16 to 23 minutes. At the end of the smoking step, e.g. during the last 5 to 15 minutes, it may be preferred not to add any smoke, but to allow the sausages to incubate in the smoking chamber filled with smoke. Smoking during step c) is preferably conducted at a temperature of between 40 and 100°C, preferably between 45 and 55°C, most preferably between 48 and 52°C, to result in optimal snap- or bite results. Smoking step c) is contributing to the optimal bite- or snap effect and is not only present for reasons of taste. The relative air humidity in the smoking room is preferably between 40 and 50%. The air humidity is, may gradually increase during this step from e.g. 20% at the beginning of the smoking step and 50% at the end of the smoking step.

The use of a liquid smoke, comprising e.g. a smoke essence and as might be used to spray on a sausage in the smoking chamber or the use of a smoke substitute, such as a smoke flavour is not intended with "smoking" as mentioned in step c) of the present invention. Several technologies of smoke generation are known, such as e.g. friction smoke, wherein wood is pressed against a spinning metal wheel to produce heat; smoulder smoke, produced by heating wood dust or wood particles on a smoulder plate; steam smoke, which is produced by leading overheated steam through wood particles; or fluidisation smoke, wherein hot air is led through fluidized wood particles. The different ways of generating smoke lead to different smoke qualities as the temperature during the smoke generation varies and therefore different products of decomposition arise. To get the optimal snap- or bite effect it is preferred to use the friction smoke or smoulder smoke technology. A person skilled in the art knows how to conduct the different types of smoking. Hence, preferably, the present invention relates to a process wherein one of friction smoke and smoulder smoke is used during smoking step c).

The optional pre-heating step, the drying step a) and the smoking step b) of the process of the present invention, are preferably conducted in the same chamber. As a result, some of the steps can be partly combined by e.g. adjusting the temperature and the relative air humidity. For example, the drying step and the smoking step may be combined, and conducted simultaneously, when desired.

After the smoking step c), the sausage is denaturated in step d). Denaturation in step d) means stabilisation of the protein matrix by denaturation of the meat protein present in the sausage, in order to make the texture of the sausage firm and to make the sausage edible. The denaturation step d) is preferably conducted at a temperature of from 60 to 90°C, more preferably of from 65 to 80°C, most preferably, of from 70 to 75°C. Denaturation preferably is conducted during 5 to 60 minutes, preferably from 10 to 20 minutes.

After denaturation step d), the sausage may optionally be allowed to cool during a cooling step. Cooling can be achieved preferably by spraying water over the sausages or air. The sausages are preferably cooled to room temperature.

After the denaturation step d) or after the optional cooling step following the denaturation step d) a second drying step e) is conducted. This step appeared to be critical to provide stability to the sausage during the later sterilisation step. Absence of this drying step results in bursting of the casing during sterilisation. During this step e), the weight of the sausages is further reduced with preferably 7 to 15%, preferably 9 to 11 % of the weight they had after the step d). The drying step e) is conducted up to an Aw of between 0.930 and 0.970 of the total sausage, preferably till an Aw of from 0.940 to 0.960. The drying step e) is preferably conducted at a temperature of from 15 to 35°C, preferably from 25 to 32°C. The relative air humidity during drying step e) is preferably from 55 to 85%, preferably from 60 to 75%. The drying step e) preferably takes from 4.5 to 10 hours, preferably from 6 to 8 hours.

Following the drying step e), the sausage is packaged. A packaging should be water tight and air tight, to guarantee a protected ambiance for the sausage. Preferably, the packaging is also not translucent or transparent, to exclude any influence from light on the quality of the sausage. In a preferred situation, the packaging contains only one sausage. Packaging of more sausages in one packaging may lead to damage of the casing of the sausages or to suboptimal sterilisation. The packaging, after sealing, may contain an inert gas, such as nitrogen, for optimal preservation conditions. Most preferably, the oxygen content that remains in the packaging is below 1.5 vol.%, preferably below 1%, in order to prevent rancidity as much as possible.

The fat content of the filling in the resulting sausage is preferably from 5 to 50%wt, more preferably from 30 to 40%wt, most preferably from 33 to 38 %wt, based on the weight of the sausage.

The packaged sausage is subsequently sterilised in step f). Sterilisation guarantees ambient stability of the sausage. The products will have a shelf life of at least 2 months, preferably at least 6 months. Sterilisation is conducted by heating the packaged sausage by at least one selected of e.g. steam, microwave, convection oven, water, and mixtures thereof. Sterilisation is preferably conducted to an Fₒ-value of at least 0.4 and preferably less than 6, preferably between 1 and 4, more preferably between 1.1 and 1.8. These values are based when measured at the coldest spot in the sterilisation chamber, e.g. the "cold spot" in a retort apparatus, during the sterilisation process. This spot is chosen, to guarantee complete and safe sterilisation of the product. Fₒ -value means the sterilisation effect equivalent to a stay at 121.1°C expressed in minutes. The Fₒ -value shows the number of minutes, which leads at a temperature of 121.1 C to a lethal effect. This lethal effect is equivalent with the sum of lethal effects during the whole sterilisation process. The table below indicates the relative lethal effect per minute at different temperatures compared to 121.1°C. In this way it can be calculated how the sterilisation time can be adjusted to reach the equivalent of 1 minute at 121.1°C. For example, when sterilising at 105°C, the time will be 40 times longer to reach the effect of 1 minute at 121.1°C.

| Temperature [°C] | lethal effect per minute |
|---|---|
| 100 | 0.008 |
| 105 | 0.025 |
| 110 | 0.078 |
| 115 | 0.245 |
| 120 | 0.776 |
| 121 | 0.977 |
| 121.1 | 1.000 |

The processing time for sterilisation is preferably from 1 minute to 120 minutes, more preferably from 15 minutes to 55 minutes, even more preferably from 25 minutes to 50 minutes, most preferably from 35 to 45 minutes. The sterilisation temperature preferably is from 90 to 130°C, preferably form 95 to 125°C, more preferably from 100 to 110°C.

In a further aspect, the present invention relates to a sausage obtainable by the process of the present invention. The sausage according to the invention surprisingly showed an improved snap- or bite effect, compared to conventional ambient stable sausages as produced e.g. by a process using co-extrusion.

The snap- or bite effect can best be judged in a comparative test by a tasting panel as it is difficult to catch this sensory effect in objective terms. A feature contributing to the effect is the strength of the casing of the sausage. This strength can be measured e.g. by measuring the force which is required to perforate the casing. This force can be measured in an apparatus to measure tensile strength from Instron, as well known to the person skilled in the art.

The force required to perforate the casing of the sausage as produced according to the process of the present invention is preferably between 28 and 33N, more preferably between 29 and 31 N, most preferably between 29.5 and 30.5N. The measuring tool is a guillotine with a v-shaped form in the apparatus to measure tensile strength from Instron. Probes were cut into equal pieces and had a temperature of 18°C.

Therefore, preferably, the present invention further relates to a sausage obtainable by the process of the invention, wherein the casing has a tensile strength of between 28 and 33N, preferably between 29 and 31 N, more preferably between 29.5 and 30.5N.

### Example 1

A meat dough was prepared by cutting and mixing 265 kg pork meet, 30 kg water and 6 kg spices. The resulting dough was filled into a casing using a filling apparatus from Handtmann. The casing comprised 50 wt% of beef collagen and 10%of cellulose. After filling, the casing was twisted in sausages with a length of 20 cm. The resulting sausages were dried during 70 minutes at 50°C. the Aw was 0.968. Then they were smoked in a smoking room at a temperature of 50°C and heated to a temperature of 73°C during a time of 15 minutes for denaturation. A second drying step was done for 8 hours at 25°C and a relative humidity of 75 %. The Aw was 0.95. The smoked sausages were then packaged and sterilised in a retort apparatus. Sterilisation was performed at an F₀ value of 1.1. The chamber was heated up to a temperature of 110°C, which took 9 minutes. The 110°C temperature was maintained for 43 minutes and then cooled down to room temperature during about 20 minutes. The packaged sausages had a shelf life of 5 months.

### Example 2

The bite/snap effect of several types of sausages has been compared in a panel test consisting of 5 people. The snap- or bite effect was rated.

Sausages B, C, and F were produced according to the process of the invention, see Example 1. They showed an excellent snap- or bite effect. Samples A, D, E and G are comparative examples. Their snap-or bite effect was relatively poor or absent. In samples A-F the filling was treated with the enzyme transglutaminase.
A: sausage using a beef collagen casing, coagulated before drying of the casing, and the process of the invention, but no smoking step was applied.
B: sausage made according to the process of the invention, using a beef collagen casing, coagulated before drying of the casing.
C. sausage made according to the process of the invention, using a beef collagen casing, coagulated before drying of the casing.
D. sausage made according to the process of the invention, using a beef collagen casing, coagulated before drying of the casing, but wherein 11 % total weight reduction was achieved during the drying steps.
E. sausage made according to the process of the invention, using beef collagen casing, but not coagulated before drying of the casing. The casing was dried with hot air after extrusion.
F. sausage made according to the process of the invention, using a pork collagen casing, coagulated before drying of the casing.
G: sausage made using a beef collagen casing, which casing was applied by co-extrusion of the casing and the filling, and wherein a smoke solution was used, instead of a smoking step according to the present invention. No drying steps and denaturation step was used in the way and order as claimed in the present invention.

The experiment of Example 2 shows that a sausage prepared using a casing containing 30-70 beef collagen, coagulated before drying of the casing, which has been smoked and sufficiently dried, provides an improved snap- or bite effect.

## Claims

1. A process to prepare an ambient stable sausage comprising a filling and a casing, the process comprising the steps of:
a) filling a dried casing with a filling, wherein the casing comprises from 30 to 70 %wt. of collagen, based on the weight of the casing, wherein the collagen of the casing has been coagulated before drying the casing, resulting in at least one sausage,
b) drying the sausage resulting from step a) to a water activity of between 0.960 and 0.990,
c) smoking the sausage resulting from step b),
d) denaturating the sausage resulting from step c),
e) drying the sausage resulting from step d) to a water activity of between 0.930 to 0.970,
f) packaging the sausage resulting from step e) in a packaging
g) sterilising the packaged sausage resulting from step f).

2. Process according to claim 1, wherein the collagen is selected from beef collagen, pork collagen and mixtures thereof.

3. Process according to any of the preceding claims, wherein the collagen is beef collagen.

4. Process according to any of the preceding claims, wherein the casing in step a) further comprises cellulose.

5. Process according to any of the preceding claims, wherein the fat content of the filling at step a) amounts from 15 to 50%wt.

6. Process according to any of the preceding claims, further comprising the step of treating the filling with the enzyme transglutaminase, before step a).

7. Process according to any of the preceding claims, wherein the smoking is conducted for 10 to 60 minutes.

8. Process according to any of the preceding claims, wherein the smoking during step c) is conducted at a temperature of between 40 and 100 °C.

9. Process according to any of the preceding claims wherein one of friction smoke and smoulder smoke is used during smoking step c).

10. Process according to any of the preceding claims, wherein denaturating in step d) is conducted at a temperature of from 60 to 90°C.

11. Process according to any of the preceding claims, wherein the sterilisation is conducted to an F₀-value of at least 1 and less than 6.

12. Process according to any of the preceding claims, wherein the sterilisation temperature is from 90 to 130°C.

13. A packaged sausage obtainable by the process of the present invention.

14. Packaged sausage according to claim 13, wherein the casing of the sausage has a tensile strength of between 28 and 33N.
